# EUROPEAN PATENT SPECIFICATION

(11) **EP 0 491 405 B1**
(45) Date of publication and mention of the grant of the patent: **22.02.1995**
(21) Application number: 91200970.1
(22) Date of filing: 23.04.1991
(51) Int. Cl.: A01D 41/14

(54) **A foldable head for a maize picker machine**
Klappbarer Vorsatz für Maiserntemaschine
Tablier pivotable pour récolteuse de mais

(30) Priority: 18.12.1990 IT 6801390
(43) Date of publication of application: 24.06.1992
(73) Proprietor: CAPELLO F.LLI RENATO E FRANCESCO S.N.C., I-12020 Fraz. Madonna dell'Olmo (Cuneo) (IT)
(72) Inventor: Capello, Renato, I-12022 Busca (Cuneo) (IT); Capello, Francesco, I-12020 Cuneo (IT)
(74) Representative: Robba, Eugenio

(56) References cited:
- EP-A- 0 131 853
- CH-A- 358 857
- DE-A- 1 801 639
- DE-A- 2 026 190
- DE-C- 3 828 293
- DE-U- 8 534 520
- DE-U- 8 535 733
- FR-A- 1 452 660
- FR-A- 2 263 675
- FR-A- 2 532 517
- US-A- 4 409 780

## Description

The present invention relates to a foldable head for a maize picking machine.

It has long been known that the previous maize picking heads to be be mounted to the front of a combine harvester and the like become wider and wider for an improved yield in the field, so that their transportation on the road from the field storage to the field to be harvested and viceversa, is becoming increasingly troublesome in view of the head size and the consequent outstanding occupancy of the roadway.

The problem of said abnormal and larger than usual occupancy can be solved in two ways: the first one provides for properly escorting and signalling such abnormal size; a second known way consists in building the heads as foldable heads, such as to allow a normal occupancy of the roadway during the transportation thereof.

Now, in a head for a maize picking machine two essential requirements are to be considered in a design allowing for the folding up of the head and the restoring to the original size thereof in the field that is to be harvested: the pick up screw and the plurality of chains for pulling the cobs from the ground to said screw that are provided in a number of one for each tooth.

The means for restoring the head to the extended configuration is therefore to be quite accurate, easy to be handled and ensuring an accurate coupling between the different members to prevent umbalances therebetween.

A typical example of coupling means for said foldable members consists in the use of a forked "joint" comprising at least two members provided with facing projections, positioned in such a way as to be introduced into each other upon the opening and the fixing of the head, so as to create a constraint adapted to allow the synchronous movement of the members.

Such kind of constraint did not prove a viable means: it brought about inconveniences, particulary due to the wearing of the teeth of said forks.

EP-A-131 853 discloses a maize harvesting machine having a multi-part harvesting machine attachement fastened to the front of the machine with cantilever side portions which can be folded in together with the harvesting implement fastened to them by hydraulic cylinders moving side portions of said head in opposite directions, said attachement being provided with a pick up screw shaft comprising a central part and two lateral screw parts, and with shaft driving chains for pulling cobs, and clutch engagement means for rigidly fixing together said central part and lateral screw parts.

The object of the present invention is to overcome the above mentioned inconveniences by creating a practical and effective joint both for the screw and the shaft driving the chains.

The invention consist of a maize harvesting machine having a multi-part harvesting machine attachment or head fastened to the front of the machine with cantilever side portions which can be folded in by fluid pressure means such as hydraulic cylinders moving said side portions of said head in opposite directions, said head being provided with a pick up screw shaft comprising a central part and two lateral screw parts, and with a shaft driving chains for pulling cobs, and clutch engagement means for rigidly fixing together said central part and said lateral screw parts characterized in that said clutch engagement means comprises at least a first clutch flange fastened to one lateral part of the screw shaft and a second clutch flange fastened to the central part of said shaft, said second clutch flange being supported by elastic means coaxial therewith, one of said clutch flanges being provided with equally-spaced axial pins orthogonal to the surface of the flange, and the other of said flanges being provided with corresponding equally-spaced axial cavities adapted to receive said axial pins of said one flange, and in that said shaft driving said chains comprises at least a movable shaft part which carries a first drive flange and a fixed shaft part which carries a second drive flange, at least one of said drive flanges being provided with teeth for engaging said chains, one of said drive flanges being provided with equally-spaced axial pins orthogonal to the surface of the flange, and the other of said drive flanges being provided with corresponding equally-spaced axial cavities adapted to receive said axial pins of said one flange, both flanges of each of said pairs being blocked through a safety device made up of a rod fastened to the fixed portion of the head and slidably inserted into a slotted seat in the lower portion of the head and which rod (45) can be introduced into a suitable slot (51) provided in the corresponding movable side portion of the head, and said rod being directly actuated by the user through a linkage.

A further relevant feature of the present invention resides in that according to a preferred embodiment, the joint formed by means of the coupling of flanges with axial pins for the screw shaft is only provided at one side of the central screw shaft part, whereas the joint formed by means of the coupling of flanges with axial pins for the shaft driving the chains is provided for both the foldable sides portions.

It is to be noted that the number of axial pins provided for the coupling flange of the screw shaft is four, whereas the number of the axial pins provided for the coupling flange of the shaft driving the chains is three.

It is to be understood that the above combination is merely indicative and only aims to set forth the essence of the invention, being irrelevant to the objects of the patent whether one flange with pins is fastened to the movable or to the fixed portion of a shaft, since the other flange which is to be coupled to such one flange will be accordingly fastened either to the fixed or the movable portion of the shaft to be formed by extending the foldable members. The above references are directed to flange couplings, the introduction of pins of a flange into corresponding holes in the other flange, to movable portions fastened to one flange and fixed portions fastened to the other flange to be coupled with the former, to elastic means located coaxially with a shift member to be connected wih another shaft member of a shaft to be assembled: the choice for carrying out said couplings is a merely technical matter of design and construction choice having nothing to do with the inventive idea of the invention.

Further characteristics and advantages will become evident from the following detailed description with reference to the attached drawings, in which:

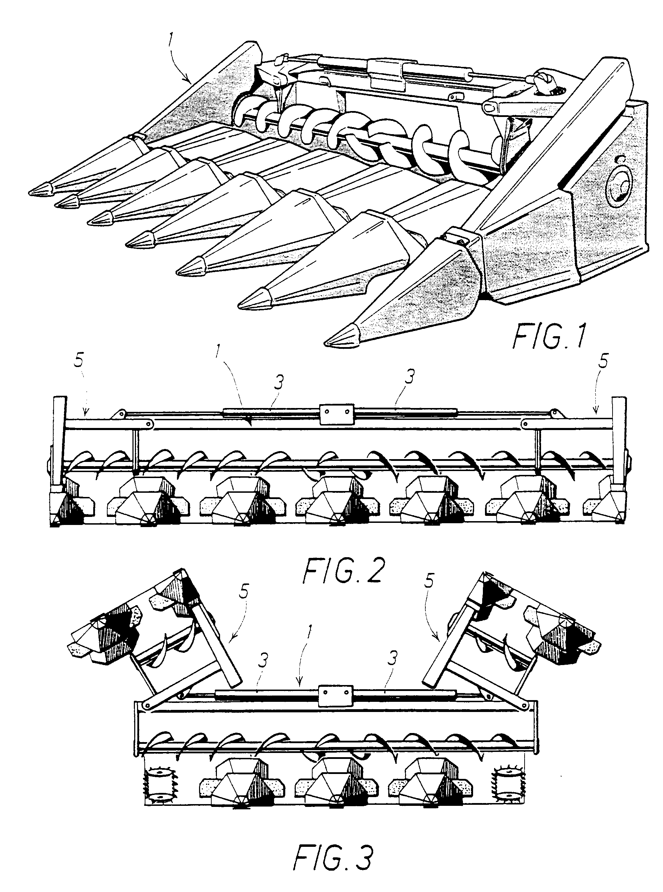

- Fig. 1 is a perspective view of the head in an open or extended position ready to work;
- Fig. 2 is a front view of the head of Fig. 1 in an open position;
- Fig. 3 is a front view of the head during the folding up process;

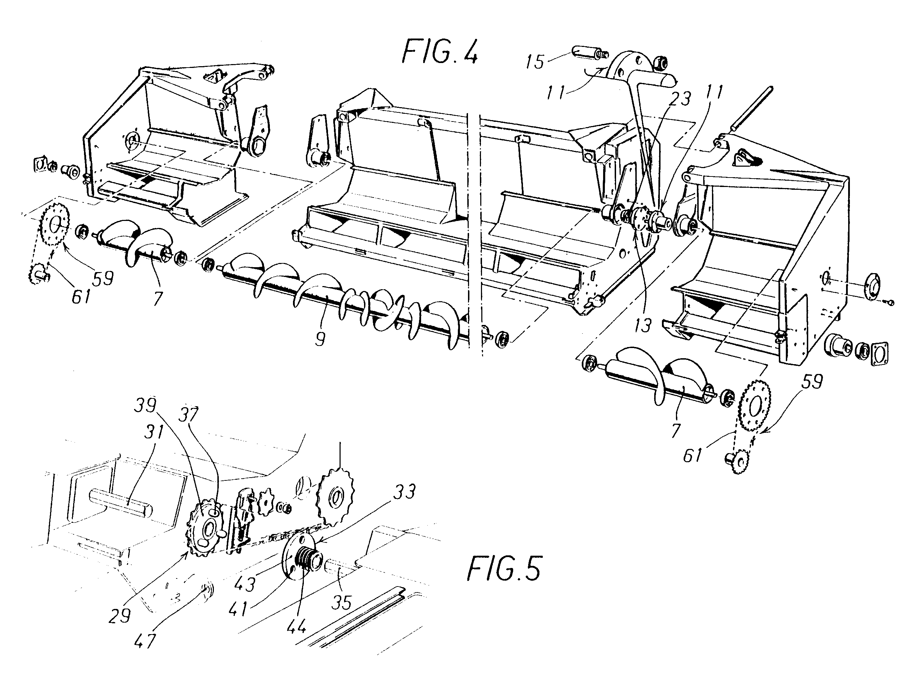

- Fig. 4 is an exploded perspective view of the head showing the screw shaft with the associated flange joint according to the invention;

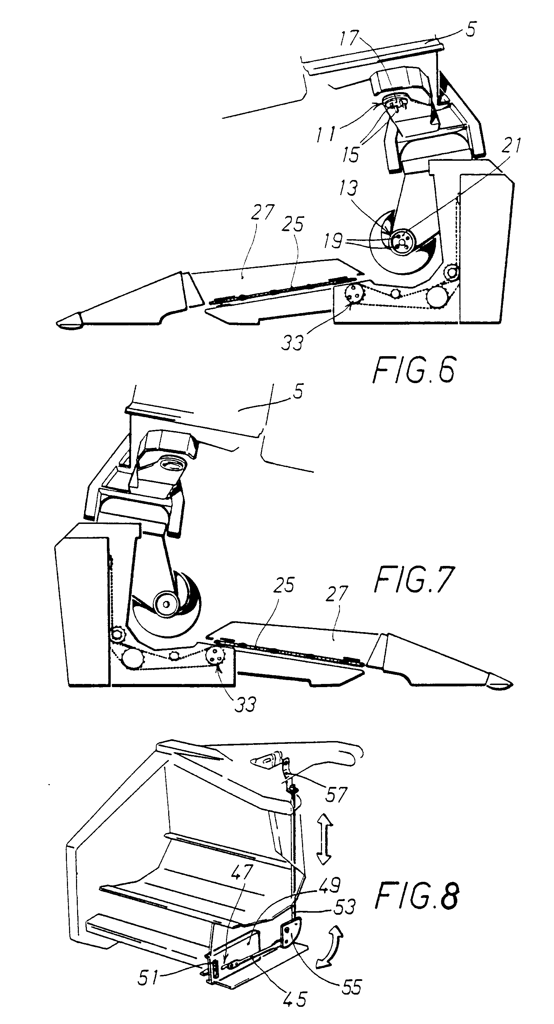

- Fig. 5 is an exploded perspective scrap view showing the flange joints of the drive shaft;
- Fig. 6 is a scrap side view showing the joint of the screw shaft and the joint of the shaft driving the chains;
- Fig. 7 is a scrap side view showing the other portion of said screw shaft and of said shaft driving the chains;
- Fig. 8 is a scrap perspective view illustrating the safety device with the movable portions coupled together.

The foldable head for a maize picker according to the invention is a conventional head 1 that has been rendered foldable thanks to fluid pressure means, such as a hydraulic cylinder 3 that moves along one direction and the opposed one the movable side parts 5 of the head in such a way as to fold them up and get a head having a reduced width adapted to be easily transported on a road from the store to the fields and viceversa.

The clutch engagement means provided for stiffening the screw shaft after the removable portions 7 thereof and the fixed portion 9 have been joined together, comprises a clutch or coupling flange 11 fastened to the movable portion 7 of the screw shaft, adapted to clutch a similar flange 13, fastened to the fixed portion 9 of said shaft. Said clutch engagement is carried out through axial pins 15 that are orthogonal to the surface 17 of one flange fitting into as many corresponding regularly spaced cavities 19 provided on the surface 21 of the other flange which is supported by suitable elastic means 23 coaxial with the shaft 9.

Also the clutch engagement means provided for stiffening the shaft which drives the chains 25 moving over the teeth 27 comprises at least a clutch flange 29 fastened to the movable portion 31 of the shaft driving the chains, adapted to clutch another similar flange 33 fastened to the fixed portion 35 of said shaft. Said clutch engagement takes place through the fitting of axial pins 37, orthogonal to the surface 39 of one flange and regularly spaced thereon, into as many cavities 43 of the other flange, in case also this latter being supported by suitable elastic means 44.

Said pairs of flanges 11, 13 and 29, 33 are securely blocked together by a dedicated safety device (see Fig. 8) made up by a rod 45 that can be slidably inserted into a slotted seat 47 provided in the lower portion 49 of the head, in correspondence with the walls of the teeth, which is fastended to the fixed portion and can be introduced into a suitable slot 51 provided in the movable portion thereof; said rod 45 being directly actuated by the user through a proper linkage 53, 55 connecting said rod with the control device 57.

It is to be noted that in the embodiment disclosed and illustrated, the joint by means of the coupling of flanges 11, 13 with axial pins for the screw shaft is only provided at one side of said screw, at the other side said shaft 7 being controlled through conventional means, e. g. see the toothed gear 59 and the chain 61, whereas the joint by means of the coupling of flanges 29, 33 with axial pins for the shaft driving the chains is provided at both sides of said shaft.

It is further to be noted that according to a preferred embodiment of the invention, the number of axial pins 15 provided for the coupling flanges 11, 13 of the screw shaft is four, whereas the number of the axial pins 37 provided for the coupling flanges of the shaft driving the chains is three.

It is evident that the invention is not to be limited to the described and illustrated embodiment, but that several modifications and additional improvements can be carried out without departing from the invention.

## Claims

1. A maize harvesting machine having a multi-part harvesting machine attachement or head (1) fastened to the front of the machine with cantilever side portions (5) which can be folded in by fluid pressure means such as hydraulic cylinders (3) moving said side portions (5) of said head in opposite directions, said head (1) being provided with a pick up screw shaft comprising a central part (9) and two lateral screw parts (7, 7), and with a shaft (31, 35) driving chains (25) for pulling cobs, and clutch engagement means for rigidly fixing together said central part (9) and said lateral screw parts (7, 7), characterized in that
said clutch engagement means comprises at least a first clutch flange (11) fastened to one lateral part (7) of the screw shaft and a second clutch flange (13) fastened to the central part (9) of said shaft, said second clutch flange being supported by elastic means (23) coaxial therewith,
one of said clutch flanges (11, 13) being provided with equally-spaced axial pins (15) orthogonal to the surface (17) of the flange (11), and the other of said clutch flanges being provided with corresponding equally-spaced axial cavities (19) adapted to receive said axial pins (15) of said one flange (11);
and in that said shaft driving said chains (25) comprises at least a movable shaft part (31) which carries a first drive flange (29) and a fixed shaft part (35) which carries a second drive flange (33), at least one (33) of said drive flanges being provided with teeth for engaging said chains (25),
one of said drive flanges being provided with equally-spaced axial pins (37) orthogonal to the surface (39) of the flange (29), and the other (33) of said drive flanges being provided with corresponding equally-spaced axial cavities (41) adapted to receive said axial pins (37) of said one flange (29);
both flanges (11,13; 29,33) of each of said pairs being blocked through a safety device made up of a rod (45) fastened to the fixed portion of the head and slidably inserted into a slotted seat (47) in the lower portion (49) of the head (1) and which rod (45) can be introduced into a suitable slot (51) provided in the corresponding movable side portions of the head, and said rod (45) being directly actuated by the user through a linkage (53, 55).

2. A maize harvesting machine as claimed in claim 1, characterized in that said second drive flange (33) on the fixed shaft part (35) is supported by elastic means (44) that are coaxial with said fixed shaft part (35).

3. A maize harvesting machine as claimed in claim 1, characterized in that the clutch flange being provided with axial pins (15) is said first clutch flange (11) fastened to one lateral part (7) of the pick up screw shaft.

4. A maize harvesting machine as claimed in claim 1, characterized in that the clutch flange being provided with axial pins (15) is said second clutch flange (13) fastened to the central part (9) of the pick up screw shaft.

5. A maize harvesting machine as claimed in claim 1, characterized in that the drive flange being provided with axial pins (37) is said first drive flange (29).

6. A maize harvesting machine as claimed in claim 1, characterized in that the drive flange being provided with axial pins (37) is said second flange (33).

7. A maize harvesting machine as claimed in any of claims 1 to 6, characterized in that the joint formed by means of the coupling of flanges (11, 13) with axial pins for the screw shaft is only provided at one side of the central screw shaft part (9), whereas the joint formed by means of the coupling of flanges (29, 33) with axial pins for the shaft (31, 35) driving the chains (25) is provided for both the foldable side portions (5).

8. A maize harvesting machine as claimed in any of claims 1 to 7, characterized in that the number of axial pins (15) provided for the coupling flanges (11, 13) of the screw shaft is four, whereas the number of the axial pins (37) provided for the coupling flanges (29, 33) of the shaft driving the chains (25) is three.

## Patentansprüche

1. Mais-Erntemaschine mit einer mehrteiligen Erntemaschine-Zusatzeinrichtung oder einem Kopf (1), der an der Vorderseite der Maschine befestigt ist, und mit Ausleger-Seitenteilen (5), welche mittels Flüssigkeitsdruckmittel wie beispielsweise einem Hydraulikzylinder (3) einklappbar sind und die Seitenteile (5) des Kopfes in entgegengesetzte Richtungen bewegen, wobei der Kopf (1) mit einer Greifer-Schneckenwelle versehen ist, die einen Mittelteil (9) und zwei seitliche Schneckenteile (7, 7) umfaßt, und mit einem Kettentrieb (25) für eine Welle (31, 35) zum Abernten der Kolben, und Kupplungsmittel zur festen Verbindung des Mittelteils (9) und der seitlichen Schneckenteile (7, 7) versehen sind, dadurch gekennzeichnet, daß die Kupplungsmittel mindestens einen ersten Kupplungsflansch (11) umfassen, der an einem seitlichen Teil (7) der Schneckenwelle befestigt ist und einen zweiten Kupplungsflansch (13), der am Mittelteil (9) dieser Welle befestigt ist, wobei der zweite Kupplungsflansch durch koaxial dazu angeordnete elastische Mittel (23) gehalten ist, und einer der Kupplungsflansche (11, 13) mit gleich beabstandeten, axialen Bolzen (15) rechtwinkelig zur Oberfläche (17) dem Flansches (11) versehen ist, und der andere Kupplungsflansch mit entsprechenden, gleich beabstandeten axialen Vertiefungen (19) zur Aufnahme der axialen Bolzen (15) des einen Flansches (11) versehen ist und dadurch, daß die die Wellen antreibenden Ketten (25) mindestens einen bewegbaren Wellenteil (31) umfassen, mit einem ersten Antriebsflansch (29) und mit einem festen Wellenteil (35), der einen zweiten Antriebsflansch (33) trägt, wobei zumindest einer (33) der Antriebsflansche mit Zähnen zum Eingreifen in die Ketten (25) versehen ist, wobei einer der Antriebsflansche mit gleich beabstandeten axialen Bolzen (37) rechtwinkelig zur Oberfläche (39) des Flansches (29) und der andere (33) Antriebsflansch mit entsprechenden, gleich beabstandeten axialen Vertiefungen (41) zur Aufnahme der axialen Bolzen (37) des einen Flansches (29) versehen sind, wobei beide Flansche (11, 13; 29, 33) jedes Flanschpaares durch eine Sicherungsvorrichtung verriegelt sind, die aus einer am festen Teil des Kopfes befestigten Stange (45) besteht, die verschiebbar in einen Schlitzsitz (47) im unteren Teil (49) des Kopfes (1) eingeschoben ist und wobei die Stange (45) in einen passenden Schlitz (51), der in den entsprechenden bewegbaren Seitenteilen des Kopfes angeordnet ist, einschiebbar ist und wobei die Stange (45) von der Bedienperson direkt über ein Gestänge (53, 55) betätigbar ist.

2. Mais-Erntemaschine nach Anspruch 1, dadurch gekennzeichnet, daß der zweite Antriebsflansch (33) auf dem festen Wellenteil (35) durch zum festen Wellenteil (35) koaxial angeordnete elastische Mittel (44) gehalten ist.

3. Mais-Erntemaschine nach Anspruch 1, dadurch gekennzeichnet, daß der mit axialen Bolzen (15) versehene Kupplungsflansch dieser erste, am Seitenteil (7) der Greifer-Schneckenwelle befestigte Kupplungsflansch (11) ist.

4. Mais-Erntemaschine nach Anspruch 1, dadurch gekennzeichnet, daß der mit axialen Bolzen (15) versehene Kupplungsflansch dieser zweite, am Mittelteil (9) der Greifer-Schneckenwelle befestigte Kupplungsflansch (13) ist.

5. Mais-Erntemaschine nach Anspruch 1, dadurch gekennzeichnet, daß der mit axialen Bolzen (37) versehene Antriebsflansch dieser erste Antriebsflansch (29) ist.

6. Mais-Erntemaschine nach Anspruch 1, dadurch gekennzeichnet, daß der mit axialen Bolzen (37) versehene Antriebsflansch dieser zweite Flansch (33) ist.

7. Mais-Erntemaschine nach einem der Ansprüche 1 bis 6, dadurch gekennzeichnet, daß die durch die Kupplungsmittel der Flansche (11, 13) mit axialen Bolzen für die Schneckenwelle gebildete Verbindung nur auf einer Seite des Mittelteils (9) der Schneckenwelle vorgesehen ist, wohingegen die durch die Kupplungsmittel der Flansche (29, 33) mit axialen Bolzen für die Welle (31, 35) zum Antrieb der Ketten (25) gebildete Verbindung auf beiden klappbaren Seitenteilen (5) vorgesehen ist.

8. Mais-Erntemschine nach einem der Ansprüche 1 bis 7, dadurch gekennzeichnet, daß die Anzahl der axialen Bolzen (15), die für die Kupplungsflansche (11, 13) der Schneckenwelle vorgesehen sind, vier ist, wohingegen die Anzahl der axialen Bolzen, die für die Kupplungsflansche (29, 33) an der Antriebswelle der Ketten (25) vorgesehen sind, drei ist.

## Revendications

1. Une machine de récolte du maïs présentant un accessoire ou tête de récolte multi-composant, fixé à l'avant de la machine et équipé de parties latérales en porte-à-faux (5) susceptibles d'être repliées vers l'intérieur par des moyens à pression de fluide tels que des vérins hydrauliques (3) déplaçant lesdites parties latérales (5) de ladite tête selon des directions opposées, ladite tête (1) étant équipée d'un arbre à vis de ramassage comprenant une partie centrale (9) et deux parties de vis latérales (7, 7) et comportant un arbre (31, 35), des chaînes d'entraînement (25) pour l'arrachage des épis de maïs et des moyens d'accouplement permettant de solidariser ladite partie centrale (9) et lesdites parties de vis latérales (7, 7), caractérisée en ce que
lesdits moyens d'accouplement comprennent au moins un premier flasque d'accouplement (11) fixé à une partie latérale (7) de l'arbre à vis et un deuxième flasque d'accouplement (13) fixé à la partie centrale (9) dudit arbre, ledit deuxième flasque d'accouplement étant supporté par des moyens élastiques (23) disposés coaxialement audit flasque, l'un desdits flasques d'accouplement (11, 13) étant muni de broches ou têtons axiaux régulièrement espacés (15), orthogonaux à la surface (17) du flasque (11), l'autre desdits flasques d'accouplement étant muni de cavités axiales régulièrement espacées (19), aptes à recevoir lesdits broches ou têtons axiaux (15) de l'un (11) desdits flasques,
et en ce que ledit arbre d'entraînement desdites chaînes (25) comprend au moins une partie d'arbre mobile (31) qui porte un premier flasque d'entraînement (29) et une partie d'arbre fixe (35) qui porte un deuxième flasque d'entraînement (33), l'un au moins desdits flasques d'entraînement étant muni de dents destinées à venir engrener avec lesdites chaînes (25), l'un desdits flasques d'entraînement étant muni de broches ou têtons axiaux régulièrement espacés (37, orthogonaux à la surface (39) du flasque (29), et l'autre (33) desdits flasques d'entraînement étant muni de cavités axiales régulièrement espacées (41), aptes à recevoir lesdits broches ou têtons axiaux (37) dudit premier flasque;
les deux flasques (11, 13; 29, 33) de chacune desdites paires étant bloqués au moyen d'un dispositif de sécurité constitué d'une tige (45) fixée à la partie fixe de la tête et insérée de façon coulissante dans un siège à fente (47) prévu dans la partie inférieure (49) de la tête (1), cette tige (45) pouvant être introduite dans une fente de forme adéquate (51) disposée dans les parties latérales mobiles correspondantes de la tête, et ladite tige (45) étant actionnée directement par l'utilisateur via une timonerie (53, 55).

2. Une machine de récolte du maïs selon la revendication 1, caractérisée en ce que ledit deuxième flasque d'entraînement (33) sur la partie d'arbre fixe (35) est sollicité par des moyens élastiques (44) disposés coaxialement avec ladite partie d'arbre fixe (35).

3. Une machine de récolte du maïs selon la revendication 1, caractérisée en ce que le flasque d'accouplement muni de broches ou têtons axiaux (15) constitue ledit premier flasque d'accouplement (11) fixé à une partie latérale (7) de l'arbre à vis de ramassage.

4. Une machine de récolte du maïs selon la revendication 1, caractérisée en ce que le flasque d'accouplement muni de broches ou têtons axiaux (15) constitue ledit deuxième flasque d'accouplement (13) fixé à la partie centrale (9) de l'arbre à vis de ramassage.

5. Une machine de récolte du maïs selon la revendication 1, caractérisée en ce que le flasque d'entraînement équipé de broches ou têtons axiaux (37) constitue ledit premier flasque d'entraînement (29).

6. Une machine de récolte du maïs selon la revendication 1, caractérisée en ce que le flasque d'entraînement équipée de broches ou têtons axiaux (37) constitue ledit deuxième flasque d'entraînement (33).

7. Une machine de récolte du maïs selon l'une quelconque des revendications 1 à 6, caractérisée en ce que la liaison réalisée par l'accouplement des flasques (11, 13) avec des broches ou têtons axiaux pour l'arbre à vis n'est prévue que d'un côté de la partie centrale (9) de l'arbre à vis, tandis que la liaison réalisée par l'accouplement des flasques (29, 33) avec les broches ou têtons axiaux pour l'arbre (31, 35) d'entraînement des chaînes (25) est prévue pour les deux parties latérales repliables (5).

8. Une machine de récolte du maïs selon l'une quelconque des revendications 1 à 7, caractérisée en ce que le nombre de broches ou têtons axiaux (15) prévu pour les flasques d'accouplement (11, 13) de l'arbre à vis est de quatre, tandis que le nombre de broches ou têtons axiaux (37) prévu pour les flasques d'accouplement (29, 33) de l'arbre d'entraînement des chaînes (25) est de trois.
